# DEMANDE DE BREVET EUROPEEN

(11) **EP 0 603 441 A1**
(43) Date de publication de la demande: **29.06.1994**
(21) Numéro de dépôt: 92403539.7
(22) Date de dépôt: 23.12.1992
(51) Int. Cl.: F16H 25/24, F16J 15/52

(54) **Actuateur linéaire étanche**

(71) Demandeur: SAGEM SA, F-75783 Paris Cédex 16 (FR)
(72) Inventeur: Soutif, Christophe, F-95000 Cergy (FR); Godineau, Stéphane, F-78100 St Germain En Laye (FR); Hugot, Robert, F-78700 Conflans Ste Honorine (FR); Le Manner, Jean-Claude, F-78820 Juziers (FR)
(74) Mandataire: Fort, Jacques

(57) **Abrégé**

L'actuateur, utilisable dans une ambiance n'autorisant pas la lubrification humide, comprend un moteur électrique rotatif pas à pas (10) dont l'arbre de sortie (12) est attelé à une vis (22) engrenant un écrou (36) et immobilisée en translation par des paliers (28,30) encadrant l'écrou. La partie externe de l'écrou (36) est reliée de façon étanche d'une part à une première enveloppe (43) enfermant le moteur (10) et un des paliers (28), d'autre part à une seconde enveloppe (32) enfermant l'autre palier (30), par des soufflets métalliques (40,42) respectifs à rigidité en torsion élevée.

## Description

La présente invention concerne les actuateurs linéaires devant fonctionner dans un environnement interdisant le fonctionnement de paliers à lubrification humide. Elle trouve une application particulièrement importante dans les appareils et installations comportant un actuateur qui doit fonctionner en ultra-vide. A titre d'exemple de telles applications, on peut citer les actuateurs destinés à être utilisés sur des satellites d'observation ou de télécommunication, dans lesquels des organes de pointage, tels que des miroirs ou des antennes à lobe étroit, doivent être orientés avec précision.

On a déjà proposé de constituer des actuateurs linéaires du type comprenant un moteur électrique rotatif pas à pas dont l'arbre de sortie est attelé à une vis engrenant un écrou et immobilisée en translation par des paliers lubrifiés de guidage encadrant l'écrou.

Il est impossible d'utiliser des lubrifiants de type humide (graisse ou huile) sous vide poussé, du fait de l'élimination rapide du lubrifiant. On a déjà proposé d'utiliser des lubrifiants secs sur les éléments en mouvement relatif. Mais il subsiste des incertitudes graves sur la tenue à long terme d'une telle lubrification dans un environnement sous vide secondaire.

La présente invention vise à fournir un actuateur linéaire à lubrification de type humide capable de fonctionner sous vide pendant des durées importantes, pouvant atteindre et dépasser une dizaine d'années. Elle propose dans ce but un actuateur du type ci-dessus défini, dans lequel la partie externe de l'écrou est reliée de façon étanche, d'une part à une première enveloppe enfermant le moteur et un des paliers, d'autre part à une seconde enveloppe enfermant l'autre palier, par des soufflets métalliques respectifs, à rigidité en torsion élevée.

On constitue ainsi, du fait de l'absence de tout joint coulissant, une enceinte étanche capable de maintenir une atmosphère contrôlée autour des paliers et de la vis pendant un intervalle de temps très important, donc d'éviter le dégazage et la migration d'un lubrifiant de type humide.

L'invention permet donc d'écarter les défauts qui s'opposaient jusqu'ici à l'utilisation d'une enceinte étanche de protection, à savoir le risque de fuite réduisant progressivement la pression interne jusqu'à la valeur qui règne dans l'environnement.

Pour éviter tout risque de fuite aux jonctions, tous les raccordements nécessaires pour constituer l'enceinte sont avantageusement effectués par soudage sans matériau d'apport ; ce soudage peut notamment être effectué par faisceau laser, dans l'atmosphère de gaz inerte qu'il est souhaitable de maintenir à long terme.

Les soufflets devant avoir en même temps une rigidité en torsion très élevée (pour éviter tout déplacement en rotation de l'écrou, qui serait une source d'hystérésis et d'erreur) et très souple en translation (pour que les forces antagonistes s'opposant au déplacement longitudinal de l'écrou soient faibles), on utilisera avantageusement un soufflet comportant des plis de grande profondeur, réalisés par soudage de plis successifs (plutôt que par hydroformage). La profondeur des plis sera généralement comprise entre le tiers et la moitié du rayon externe du soufflet lorsque ce dernier est dans l'état comprimé axialement. Il est également souhaitable de constituer l'ensemble des composants de l'enceinte en un même matériau métallique, afin d'éviter les problèmes de soudage que posent des matériaux différents : on pourra notamment utiliser le titane.

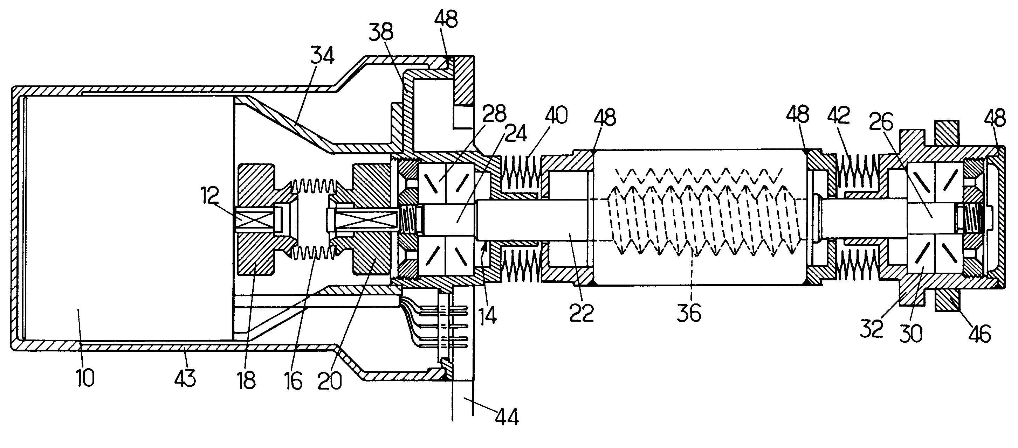

L'invention sera mieux comprise à la lecture de la description qui suit d'un actuateur constituant un mode particulier de réalisation de l'invention, donné à titre d'exemple non limitatif. La description se réfère à la figure unique qui l'accompagne et qui est une vue en coupe longitudinale de l'actuateur, l'écrou étant représenté en vue externe.

L'actuateur comprend un moteur électrique pas à pas 10 de constitution en elle-même connue, mais comportant avantageusement des liaisons de sortie de ces bobinages redondantes pour pallier les effets d'une rupture éventuelle. L'arbre 12 de sortie du moteur est attelé à une tige 14 de façon à l'entraîner en rotation. Dans le mode de réalisation montré, l'arbre 12 est attelé à la tige 14 par des moyens permettant de compenser un défaut d'alignement éventuel, comportant un soufflet 16 reliant deux disques 18 et 20 calés l'un sur l'arbre et l'autre sur la tige.

La tige 14 comporte une partie centrale 22 formant vis encadrée par deux portées latérales 24 et 26 montées dans des paliers 28 et 30 de guidage et de maintien axial. Le palier 28 est monté dans un flasque 38 fixé par des moyens quelconques, tels qu'une jupe 34, au stator du moteur 10. Le palier 30 est placé dans un boîtier indépendant 32.

Sur la vis 22 est monté un écrou 36 capable de se déplacer axialement le long de la vis, mais immobilisé en rotation par des moyens qui seront décrits plus loin. La vis 22 et l'écrou 36 sont d'un type évitant les hystérésis et les à-coups de fonctionnement : on peut notamment utiliser une vis à rouleaux ou à recirculation de billes. Le pas de la vis et de l'écrou est choisi en fonction de la résolution recherchée.

Pour assurer l'étanchéité complète de l'espace contenant le lubrifiant destiné à garantir un fonctionnement satisfaisant des paliers et de la liaison vis-écrou, l'ensemble des composants qui viennent d'être décrits est enfermé dans une enceinte étanche, ne comportant aucun joint glissant, que ce soit en translation ou en rotation.

Pour cela, l'ensemble constitué par le moteur 10, l'attelage du moteur à la tige et le palier 28 est enfermé dans une première enveloppe qui est reliée à la partie externe de l'écrou 34 par un premier soufflet métallique 40. Le boîtier 32 constitue une seconde enveloppe qui est reliée à la partie externe de l'écrou opposée au premier soufflet par un second soufflet métallique 42.

Les soufflets métalliques 40 et 42 doivent avoir une rigidité en torsion suffisamment importante pour interdire toute rotation appréciable de 1'écrou 36, lorsque la première enveloppe 43 et la seconde enveloppe 32 sont fixes, par exemple du fait de leur montage sur des éléments de structure respectifs 44 et 46. Mais les soufflets doivent en même temps être aussi souples que possible dans le sens axial, de façon à ne pas opposer une force importante au moteur 10 et à ne pas non plus exercer une force tendant à ramener l'écrou vers une position particulière lorsque le moteur 10 n'est pas alimenté.

Cette condition conduira en général à utiliser des soufflets de grande profondeur, fabriqués par soudage de rondelles en forme, avec formation, au sommet des plis, de cordons arrondis destinés à éviter une accumulation de contraintes. En cas de nécessité, il est possible de maintenir l'écrou dans une position angulaire invariable par un guidage coulissant qui n'est cependant généralement ni nécessaire, car la rigidité en torsion d'un soufflet peut être très élevée, ni souhaitable du fait de la nécessité d'une lubrification supplémentaire.

La première enveloppe 43 peut notamment être constituée par une cloche enfermant le moteur et par le flasque 38 soudé à la cloche. Etant donné que l'intégrité de l'enceinte contenant le lubrifiant est conditionnée par l'absence de porosité des liaisons, les composants de l'enceinte étanche seront généralement reliés par soudage sans métal d'apport. Bien que l'on puisse utiliser le soudage par faisceau d'électrons, on préférera en général le soudage par faisceau laser, du fait des faibles épaisseurs de matériaux à souder. De plus le soudage laser permet d'opérer en présence du gaz de remplissage, ce qui n'est pas le cas pour le soudage par faisceau d'électrons. Le métal constitutif de l'enveloppe sera généralement le titane, du fait de son inaltérabilité et de ses caractéristiques mécaniques, ou un alliage à base de titane. Le soudage peut notamment être effectué suivant les lignes indiquées par 48 sur la figure. Une liaison électrique entre le moteur 10 et l'extérieur peut être effectuée par des broches de sortie traversant une rondelle rapportée en un matériau compatible avec le reste de l'enceinte, par exemple en titane, à travers des perles de verre isolantes.

L'enceinte étanche peut notamment être occupée par une atmosphère de gaz inerte, par exemple d'argon, à laquelle on peut ajouter de l'hélium constituant un gaz traceur permettant de vérifier l'étanchéité par ressuage. Dans le cas où le fonctionnement aura lieu sous vide élevé, il sera généralement avantageux d'établir dans l'enceinte une atmosphère à pression inférieure à la pression atmosphérique normale.

A titre d'exemple, on peut indiquer qu'un actuateur ayant une course linéaire de quelques centimètres et une précision de l'ordre du micron est réalisable en utilisant des composants qui sont pour la plupart disponibles dans le commerce. Un tel actuateur peut notamment permettre le réglage de la position angulaire d'un organe directeur à bord d'un satellite. On peut utiliser notamment à cet effet deux ou trois actuateurs dont les écrous sont reliés à des points différents de la périphérie de l'organe directeur.

## Revendications

1. Actuateur linéaire comprenant un moteur électrique rotatif pas à pas (10) dont l'arbre de sortie (12) est attelé à une vis (22) engrenant un écrou (36) et immobilisée en translation par des paliers (28,30) encadrant l'écrou, caractérisé en ce que la partie externe de l'écrou (36) est reliée de façon étanche d'une part à une première enveloppe (43) enfermant le moteur (10) et un des paliers (28), d'autre part à une seconde enveloppe (32) enfermant l'autre palier (30), par des soufflets métalliques (40,42) respectifs à rigidité en torsion élevée.

2. Actuateur selon la revendication 1, caractérisé en ce que les enveloppes (32,43) et les soufflets (40,42) sont reliés par soudage sans métal d'apport.

3. Actuateur selon la revendication 2, caractérisé en ce que les soudures de liaison sont effectuées par faisceau laser, les enveloppes, les soufflets et la partie externe de l'écrou étant en titane ou en alliage à base de titane.

4. Actuateur selon la revendication 1, 2 ou 3, caractérisé en ce que les soufflets sont d'un type réalisé par soudage de rondelles et ont une profondeur comprise entre un tiers et la moitié du rayon externe des soufflets à l'état axialement comprimé.

5. Actuateur selon l'une quelconque des revendications précédentes, caractérisé en ce que la vis est du type à rouleaux ou à recirculation de billes.
